# EUROPÄISCHE PATENTANMELDUNG

(11) **EP 2 193 950 A2**
(43) Veröffentlichungstag der Anmeldung: **09.06.2010**
(21) Anmeldenummer: 09178025.4
(22) Anmeldetag: 04.12.2009
(51) Int. Cl.: B60K 15/04

(54) **Tankschutz und Verfahren gegen Falschbetankung eines Kraftfahrzeugs**

(30) Priorität: 05.12.2008 DE 102008055484
(71) Anmelder: Robben & Wientjes OHG, 10969 Berlin (DE)
(72) Erfinder: Robben, Dietmar, 13465 Berlin (DE); Klapproth, Dieter, 14197 Berlin (DE)
(74) Vertreter: Weisse, Renate

(57) **Zusammenfassung**

Ein Tankschutzanordnung zur Verhinderung von Falschbetankung eines Kraftfahrzeugs enthaltend eine an einer Zapfsäule (14) vorgesehene, säulenseitige RFID-Sicherungskomponente (16) mit einer kraftstoffabhängigen Codierung und einem RFID-Lesegerät und eine zum Kraftfahrzeug gehörige, fahrzeugseitigen RFID-Sicherungskomponente (20), die mit der säulenseitigen Sicherungskomponente (16) zusammenwirkt und mit einer Codierung für einen für das Fahrzeug zugelassenen Kraftstoff versehen ist, wobei die Sicherungskomponenten (16, 20) mittels drahtloser Datenübertragung kommunizieren, ist **dadurch gekennzeichnet, dass** das RFID-Lesegerät (16) induktiv aufladbar ist.

## Beschreibung

### Technisches Gebiet

Die Erfindung betrifft eine Tankschutzanordnung zur Verhinderung von Falschbetankung eines Kraftfahrzeugs, enthaltend
(a) eine an einer Zapfsäule für Kraftstoff vorgesehene, säulenseitige RFID-Sicherungskomponente mit einer kraftstoffabhängigen Codierung und einem RFID-Lesegerät; und
(b) eine zum Kraftfahrzeug gehörige, fahrzeugseitigen RFID-Sicherungskomponente, die mit der säulenseitigen RFID-Sicherungskomponente zusammenwirkt und mit einer Codierung für einen für das Fahrzeug zugelassenen Kraftstoff versehen ist,
(c) wobei die Sicherungskomponenten (16, 20) mittels drahtloser Datenübertragung kommunizieren.

Durch Falschbetankungen von Kraftfahrzeugen können an Kraftfahrzeugen umfangreiche, teure Schäden entstehen. Unter einer Falschbetankung versteht man das Betanken eines Fahrzeuges mit einem Kraftstoff, welcher für die Verwendung in diesem Fahrzeug nicht zugelassen ist. Der EU- Gesetzgeber schreibt zum Schutz der in Fahrzeugen mit Ottomotoren verbauten Katalysatoren vor, dass die Tankeinfüllstutzen der so ausgerüsteten Fahrzeuge maximal ein Auslaßrohr einer Zapfpistole für "bleifreien" Ottokraftstoff mit 21 mm Außendurchmesser aufnehmen dürfen. Es gibt weitere Kraftstoffarten. Solche Kraftstoffarten sind beispielsweise verbleiter Ottokraftstoff und verschiedene Dieselvariationen. Die Auslaßrohre der Zapfventile für diese anderen Kraftstoffarten müssen ein Mindestmaß von 25 mm Außendurchmesser haben.

Für Fahrzeuge, die auf bleifreien Ottokraftstoff angewiesen sind, existieren aufeinander abgestellte Sicherungssysteme an den Fahrzeugen und an den Zapfpistolen. Diese Sicherungssysteme versagen bei Fahrzeugen, die auf höherwertige bleifreie Ottokraftstoffe angewiesen sind. Die Benutzung des Kraftstoffes "Super" führt hier zu Motorschäden.

Für Dieselfahrzeuge sind im europäischen Markt zwei Dimensionen von Auslaufrohren für die Zapfpistolen gängig, namlich 25 mm für Personenkraftwagen und 33 mm für Lastkraftwagen. Einige Fahrzeughersteller versuchen über diesen keiner Norm unterliegendem Außendurchmesser einen mechanischen Fehlbetankungsschutz für Dieselfahrzeuge zu entwickeln. Gründe hierfür sind zum einen "Customer - care", zum anderen die immensen Garantiekosten, die entstehen, weil häufig eine Falschbetankung nicht nachgewiesen werden kann. Dies stellt eine zum Kraftfahrzeug gehörige, fahrzeugseitige Sicherungskomponente dar. Bekannte Dieselsysteme verhindern keine Betankung mit Bio-Diesel, die bei vielen Fahrzeugmodellen zu erheblichen Schäden führen kann.

Nachteilig bei diesen Anordnungen ist es, dass sie entweder nur für die Unterscheidung zweier Kraftstoffsorten funktionieren oder aufwendig umzusetzen sind. Für die mittlerweile große Vielfalt an verschiedenen Kraftstoffen bietet die bekannte Anordnung keine Lösung. Ein weiterer Nachteil der bekannten Anordnungen ist, dass die Hersteller verschiedene Tankstutzen in ihren Fahrzeugen verbauen müssen, wodurch die Produktion von Autos teurer als notwendig ist.

Eine Nachrüstung mit den bekannten Systemen ist nicht praktikabel.

### Stand der Technik

WO 2005/021419 A1, DE 10 2005 009 463 A1, DE 10 2006 044 280, DE 10 2005 010 530 A1, GB 2435036 A, WO 2006/050474 A1 und KR 1020070111941 offenbaren Anordnungen zur Vermeidung und/oder Anzeige von Falschbetankung. Die bekannten Anordnungen weisen drahtlose Kommunikation auf. Dabei werden die Sicherungskomponenten mit Strom aus der Zapfsäule bzw. aus dem Fahrzeug versorgt. Da der Umgang mit Kraftstoffen besondere Sorgfalt und Sicherungen gegen Funken erfordert, ist die Stromversorgung der Sicherungskomponenten mit aufwändigem Schutz gegen Funkenbildung ausgestattet.

### Offenbarung der Erfindung

Es ist Aufgabe der Erfindung, einen Tankschutz der eingangs genannten Art zu schaffen, der wirtschaftlicher ist und die Möglichkeit zur Unterscheidung zwischen allen Kraftstoffen ermöglicht, leicht nachzurüsten ist und explosionsgeschützt ausgeführt ist.

Erfindungsgemäß wird die Aufgabe dadurch gelöst, dass das RFID-Lesegerät induktiv aufladbar ist. Die Verwendung eines induktiv aufladbaren Lesegerätes trägt zum Explosionsschutz bei. Die Verwendung elektrischer Geräte an Tankstellen birgt ein erhöhtes Risiko. Gerade an der Zapfpistole entstehen leicht entzündliche Gase. Daher muss jegliche Elektrik explosionsgeschützt ausgeführt sein. Das Lesegerät kann völlig gekapselt sein und kann daher keine Funken erzeugen. Das induktive Aufladen hat den Vorteil, dass auf eine aufwendige, beschädigungsgefährdete und teure Verkabelung der Zapfsäulen mit der Zapfpistole verzichtet werden kann. Durch die Verwendung drahtloser Datenübertragung können alle Kraftfahrzeuge einheitliche Tankstutzen verwenden. Die Kosten der Automobilhersteller werden durch die nun einheitlichen Bauteile reduziert. Die Nachrüstung für Altfahrzeuge lässt sich im "Cent-Bereich" erreichen.

Die Codierung wird elektronisch vorgenommen. Somit kann das Vertauschen von Kraftstoffsorten wirksam verhindert werden. Bisher wird nur per gesetzlichen Vorgaben verhindert, dass ein Kraftfahrzeug, das bleifreien Ottokraftstoff benötigt, mit Dieselkraftstoff oder verbleiten Ottokraftstoff betankt wird. Ein Kraftfahrzeug mit Dieselmotor kann derzeit noch versehentlich mit Otto Kraftstoff betankt werden, was zu kostenintensiven Schäden am Kraftfahrzeug führt. Eine Falschbetankung unter den verschiedenen Dieselsorten ist mit der erfindungsgemäßen Anordnung nicht mehr möglich.

Die drahtlose Kommunikation erfolgt mittels RFID Technologie. Dabei handelt es sich um eine kostengünstige und zuverlässige Art der Kommunikation.

In einer besonders vorteilhaften Ausgestaltung umfasst die fahrzeugseitige Sicherungskomponente einen passiven Transponder. Durch die Verwendung eines passiven Transponders lassen sich Fahrzeuge einfach nachrüsten. Der Transponder kann als Aufkleber an der Tankklappe ausgebildet sein, oder anderweitig in der Nähe der Tanköffnung befestigt werden.

Das RFID-Lesegerät, welches aktiv funktioniert, ist an der Zapfpistole vorgesehen. Das Lesegerät kann die eingelesene Codierung für Kraftstoff direkt an ein Vergleichsmittel weiterleiten. Das Vergleichsmittel vergleicht dann die beiden Codierungen und sendet bei Übereinstimmung ein Freigabesignal zur Kraftstoffpumpe der Zapfsäule. Durch eine Begrenzung der Lesereichweite der Antenne und regelmäßige Auslesvorgänge während des Tankvorgangs ist sichergestellt, dass die Kontrolle nicht durch einen fremden Transponder verfälscht wird.

In einer vorteilhaften Ausgestaltung der Erfindung ist die zapfsäulenseitige Sicherungskomponente nachrüstbar. Für die Tankstellenbetreiber lassen sich dadurch bestehende Zapfsäulen einfach und kostengünstig nachrüsten.

In einer vorteilhaften Ausgestaltung der Erfindung sind Mittel zum Verhindern der Betankung bei mangelnder Übereinstimmung der Codierungen vorgesehen. Dabei kann es sich um ein Steuersignal an die Förderpumpe oder ähnliches handeln.

Vorteilhafter Weise sind signalgebende Mittel vorgesehen, die die Zapfsäule freigeben. Diese können in das Lesegerät integriert werden, so dass nach dem Vergleichen der Codierungen ein Freigabesignal an eine Empfangseinheit in der Zapfsäule gesendet wird.

Vorteilhafterweise sind Mittel zur manuellen Freigabe des Tankvorgangs vorgesehen. Fahrzeuge, die noch nicht mit einem Transponder ausgestattet sind, sollen nicht vom Tanken ausgeschlossen werden. Dies kann beispielsweise durch einen an der Zapfsäule vorgesehenen Schalter realisiert sein, der es erlaubt, die Freigabe zum Tanken manuell zu erzeugen. Nach Beendigung der Betankung wird die Funktion des Schalters automatisch wieder zurückgesetzt.

Ein erfindungsgemäßes Verfahren zum Tankschutz umfasst die Schritte:
(a) Versehen von Fahrzeugen mit einer fahrzeugseitigen Sicherungskomponente, welche mit einer an einer Zapfsäule vorgesehenen Sicherungskomponente zusammenwirkt,
(b) Vorsehen eines RFID-Lesegerätes, an einer der Sicherungskomponenten,
(c) Herstellen einer drahtlosen Kommunikation zwischen den Sicherheitskomponenten, und
(d) Vergleichen der Codierung der fahrzeugseitigen Sicherungskomponente mit der Codierung der säulenseitigen Sicherungskomponente, wobei
(e) das Lesegerät induktiv aufgeladen wird.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine schematische Darstellung eines Tankschutzes, bei dem der Transponder fahrzeugseitig und das Lesegerät säulenseitig vorgesehen ist.
- Fig.2: zeigt schematisch eine Zapfsäule, an der ein Schalter zum Ein- und Ausschalten des Tankschutzes vorgesehen ist.

### Beschreibung des Ausführungsbeispiels

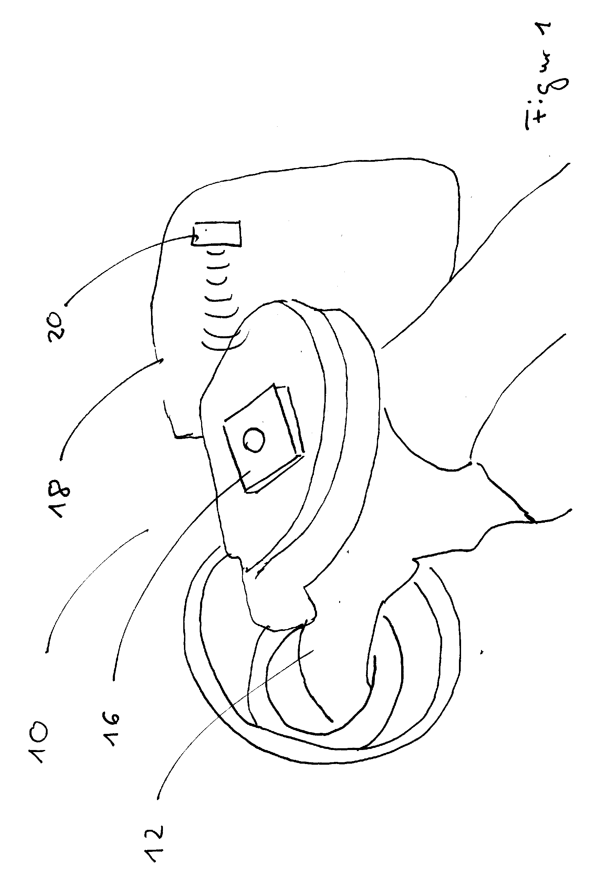

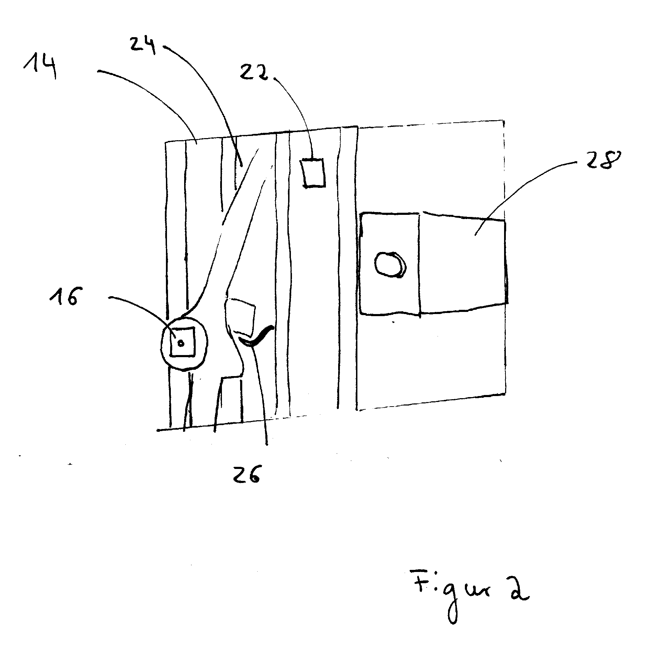

Figur 1 zeigt einen Tankschutz, der allgemein mit 10 bezeichnet ist. Eine Zapfpistole 12 einer Zapfsäule 14, welche in Figur 2 gezeigt ist, ist mit einem RFID Lesegerät 16 ausgestattet. An einer Tankklappe 18 ist ein passiver Transponder 20 vorgesehen. In dem Transponder 20 ist die Information, mit welchem Kraftstoff das Fahrzeug betankt werden darf, abgelegt. Während des in Figur 1 dargestellten Betankungsvorgangs befindet sich das Lesegerät 16 der Zapfpistole 12 in der Nähe des Transponders 20, so dass dieser ausgelesen wird. In dem RFID-Lesegerät 16 ist die Information über den Kraftstoff der Zapfsäule 14 codiert abgespeichert. Die beiden Codierungen, werden vor der Betankung miteinander verglichen. Bei einer Übereinstimmung erzeugt das Lesegerät 16 ein eindeutiges Signal, welches von einer in der Zapfsäule 14 vorgesehenen Empfangseinheit 22 empfangen wird. Dies ist in Figur 2 dargestellt.

Wenn die Empfangseinheit 22 das Freigabesignal erhält, wird in der Zapfsäule 14 eine Kraftstoffpumpe freigegeben. Nach Beendigung der Betankung wird die Zapfpistole 12 in eine Ruhehalterung 24 an der Zapfsäule 14 gesteckt. Dies ist in Figur 2 dargestellt. Ein Magnetschalter 26, der an der Ruhehalterung 24 vorgesehen ist, stellt die Kraftstoffpumpe der Zapfsäule 14 ab.

Das RFID-Lesegerät ist 16 und die Empfangseinheit 22 sind explosionsgeschützt ausgeführt. Das an der Zapfpistole 12 vorgesehene RFID-Lesergerät 16 ist abnehmbar montiert. Ein Schnellverschluss verbindet das Lesegerät 16 mit der Zapfpistole. Das Lesegerät 16 lässt sich von der Zapfpistole 12 lösen. Das Lesegerät 16 ist mit einer induktiv wiederaufladbaren Stromversorgung versehen. Zum Aufladen wird der Schnellverschluss gelöst und das Lesegerät induktiv in einem geeigneten Ladegerät geladen.

Einige Kraftfahrzeuge - beispielsweise ausländische- werden keinen Transponder 20 aufweisen. Deswegen ist in diesem Ausführungsbeispiel an der Zapfsäule 14 ein Schalter 28 vorgesehen, der es ermöglicht den Tankschutz 10 auszuschalten. Nach Betätigung des Schalters 28 kann wie gewohnt getankt werden. In diesem Fall greift keine Tankschutz-Sicherung.

In einem alternativen, nicht dargestellten Ausführungsbeispiel ist das Ladegerät für das RFID-Lesegerät an der Zapfsäule in einer Position vorgesehen, in welcher es ohne Lösen von der Zapfpistole direkt induktiv aufgeladen werden kann.

## Patentansprüche

1. Tankschutzanordnung (10) zur Verhinderung von Falschbetankung eines Kraftfahrzeugs, enthaltend
(a) eine an einer Zapfsäule (14) für Kraftstoff vorgesehene, säulenseitige RFID-Sicherungskomponente (16) mit einer kraftstoffabhängigen Codierung und einem RFID-Lesegerät; und
(b) eine zum Kraftfahrzeug gehörige, fahrzeugseitigen RFID-Sicherungskomponente (20), die mit der säulenseitigen RFID-Sicherungskomponente (16) zusammenwirkt und mit einer Codierung für einen für das Fahrzeug zugelassenen Kraftstoff versehen ist,
(c) wobei die Sicherungskomponenten (16, 20) mittels drahtloser Datenübertragung kommunizieren,
**dadurch gekennzeichnet, dass**
(d) das RFID-Lesegerät (16) induktiv aufladbar ist.

2. Tankschutzanordnung (10) nach Anspruch 1, **dadurch gekennzeichnet, dass** die fahrzeugseitige Sicherungskomponente (20) einen passiven Transponder (20) umfasst.

3. Tankschutzanordnung (10) nach Anspruch 2, **dadurch gekennzeichnet, dass** der passive Transponder (20) im Bereich der Tanköffnung vorgesehen ist.

4. Tankschutzanordnung (10) nach einem der vorgehenden Ansprüche, **dadurch gekennzeichnet, dass** das RFID-Lesegerät (16) an einer Zapfpistole (12) vorgesehen ist.

5. Tankschutzanordnung (10) nach einem der vorgehenden Ansprüche, **dadurch gekennzeichnet, dass** die Sicherungskomponenten (16, 20) als Nachrüstsatz vorgesehen sind.

6. Tankschutzanordnung (10) nach einem der vorgehenden Ansprüche, **gekennzeichnet durch** Blockier- und/oder Arretiermittel zum Verhindern von Falschbetankung.

7. Tankschutzanordnung (10) nach einem der vorgehenden Ansprüche **gekennzeichnet durch** signalgebende Mittel, welche die Zapfsäule freigeben.

8. Tankschutzanordnung (10) nach einem der vorgehenden Ansprüche **gekennzeichnet durch** Mittel zum manuellen Freigeben des Tankvorgangs.

9. Verfahren zum Tankschutz gegen Falschbetankungen, mit den Schritten
(a) Versehen von Fahrzeugen mit einer fahrzeugseitigen Sicherungskomponente (20), welche mit einer an einer Zapfsäule vorgesehenen Sicherungskomponente (16) zusammenwirkt,
(b) Vorsehen eines RFID-Lesegerätes (16), an einer der Sicherungskomponenten,
(c) Herstellen einer drahtlosen Kommunikation zwischen den Sicherheitskomponenten (16, 20), und
(d) Vergleichen der Codierung der fahrzeugseitigen Sicherungskomponente (20) mit der Codierung der säulenseitigen Sicherungskomponente (16),
**dadurch gekennzeichnet, dass**
(e) das Lesegerät induktiv aufgeladen wird.

10. Verfahren nach Anspruch 9, **dadurch gekennzeichnet, dass** ein Freigabesignal zur Betankung bei Übereinstimmung der Codierungen erzeugt wird.

11. Verfahren nach einem der Ansprüche 9 oder 10, **dadurch gekennzeichnet, dass** die fahrzeugseitige Sicherungskomponente (20) drahtlos ausgelesen wird.

12. Verfahren nach einem der Ansprüche 9 bis 11, **dadurch gekennzeichnet, dass** die Zapfsäule (14) manuell freigegeben werden kann, wenn ein Fahrzeug keine Sicherungskomponente aufweist.

13. Verwendung eines induktiv aufladbaren RFID-Lesegeräts (16) zum Auslesen eines passiven RFID-Transponders an einem Kraftfahrzeug als Tankschutz zum Verhindern von Falschbetankung eines Kraftfahrzeuges.
